# EUROPÄISCHE PATENTSCHRIFT

(11) **EP 4 388 866 B1**
(45) Veröffentlichungstag und Bekanntmachung des Hinweises auf die Patenterteilung: **16.09.2026**
(21) Anmeldenummer: 23216779.1
(22) Anmeldetag: 14.12.2023
(51) Int. Cl.: A01G 13/28

(54) **VORRICHTUNG ZUM SCHUTZ EINER PFLANZE, INSBESONDERE VORRICHTUNG ZUM SCHUTZ EINES BAUMES**
DEVICE FOR PROTECTING A PLANT, IN PARTICULAR DEVICE FOR PROTECTING A TREE
DISPOSITIF DE PROTECTION D'UNE PLANTE, NOTAMMENT DISPOSITIF DE PROTECTION D'UN ARBRE

(30) Priorität: 22.12.2022 DE 102022134539
(43) Veröffentlichungstag der Anmeldung: 26.06.2024
(73) Patentinhaber: Toko Toko GmbH, 88316 Isny (DE)
(72) Erfinder: Edelmann, Jörg, 88316 Isny (DE)
(74) Vertreter: RavensPAT Patentanwälte Partnerschaft mbB

(56) Entgegenhaltungen:
- DE-A1- 10 025 679
- DE-A1- 102022 104 353
- DE-U1- 202014 006 577
- DE-U1- 202022 001 284
- FR-A1- 2 769 794
- US-A- 329 926
- US-A1- 2005 172 550

## Beschreibung

### Stand der Technik

Vorrichtungen zum Schutz von Pflanzen, insbesondere von Pflanzensetzlingen, aus biologischem Material sind bereits bekannt. Die Vorrichtungen schützen die Pflanzen, insbesondere die Pflanzensetzlinge vor Wettereinflüssen, wie Wind, Sonne, Schnee als auch vor Verbiss durch Wildtiere. Dabei werden bei bekannten Vorrichtungen Stäbe aus einem biologischen Material durch eine Schnur zu einer Matte verbunden, dabei ist die Schnur, die die Stäbe verbindet meist länger als die Matte, um die Matte zu einem zylindrischen Gebilde zu Binden.

Vorrichtungen zum Schutz von Pflanzen sind z.B. aus der US 2005/0172550 A1, der DE 100 25 679 A1, der US 329 926 A, der DE 20 2022 001 284 U1, der FR 2 769 794 A1 oder der DE 10 2022 104 353 A1 bekannt.

Nachteilig an den bekannten Vorrichtungen ist, dass vor Ort das zylindrische Gebilde erst gebildet werden muss, was einen erhöhten Zeitaufwand mit sich bringt.

### Aufgabe und Vorteile der Erfindung

Aufgabe der vorliegenden Erfindung ist es, eine eingangs genannte Vorrichtung zum Schutz von Pflanzen unter wirtschaftlichen und technischen Aspekten zu verbessern. Insbesondere ist es Aufgabe der vorliegenden Erfindung die Vorrichtung im Hinblick auf einen einfachen Aufbau weiter zu entwickeln, sowie das Wachstumsklima für die Pflanzen zu verbessern.

Die Aufgabe wird durch die Merkmale des unabhängigen Anspruch 1 gelöst. Vorteilhafte und zweckmäßige Ausführungsformen, Varianten und Weiterbildungen der Erfindung sind in den abhängigen Ansprüchen ausgeführt.

Die Erfindung ist eine Vorrichtung zum Schutz einer Pflanze, insbesondere Vorrichtung zum Schutz eines Baumes, wobei die Vorrichtung mehrere Stäbe aus Bambus aufweist, wobei jeder der Stäbe sich in einer Längserstreckung erstreckt, wobei die Stäbe in einer Richtung quer zu den Längserstreckungen der Stäbe nebeneinander angeordnet sind, wobei die Vorrichtung eine Draht aufweist, wobei die Stäbe mittels des Drahts miteinander zu einer Matte verbunden sind, wobei jeder der Stäbe entlang seiner Längserstreckung mindestens eine Länge von 35 cm aufweist, wobei die Vorrichtung zwei Befestigungsstäbe aufweist, wobei jeder der Befestigungsstäbe sich entlang einer Längserstreckung erstreckt, wobei jeder der Befestigungsstäbe in der Längserstreckung eine Länge aufweist, welche länger ist, als eine Länge der Stäbe, wobei jeder Befestigungsstab an einem Ende einen Durchmesser aufweist, welcher größer ist, als ein Durchmesser einer der Stäbe.

Hierdurch ist eine effektive, günstige und umweltfreundliche Schutzwirkung für Pflanzen, insbesondere Pflanzensetzlinge, realisiert. Die durch die Vorrichtung geschützten Pflanzen sind beispielsweise Bäume, vor allem Baumsetzlinge. Denkbar ist auch die Nutzung der Vorrichtung für Sträucher.

Alle Stäbe sind aus Bambussplit ausgebildet. Alle Befestigungsstäbe sind aus Bambusrohr gebildet. Beispielsweise ist Bambussplit ein Teil eines Bambusrohrs. Beispielsweise ist ein Bambusrohr entlang seiner Längserstreckung in zwei oder mehr Bambussplitstäbe unterteilbar oder auftrennbar. Die Verwendung von Bambus, insbesondere Bambussplit, ist vorteilhaft, da Bambus ein geringes Gewicht aufweist aber gleichzeitig sehr stabil ist. Durch das geringe Gewicht, kann z.B. die Vorrichtung mit geringem Kraftaufwand über die Pflanze bzw. den Pflanzensetzling gestülpt werden.

Beispielsweise weist jeder der Befestigungsstäbe eine Länge auf, welche länger ist, als eine Länge des längsten Stabs der Stäbe. Beispielsweise ist ein Befestigungsstab mindestens 30 cm, mindestens 40 cm, mindestens 50 cm länger als die Länge des längsten Stabs der Stäbe. Denkbar ist, dass der Befestigungsstab relativ zu einem der Stäbe beweglich vorhanden ist. Beispielsweise ist der Befestigungsstab relativ zu allen Stäben beweglich vorhanden. Beispielsweise ist der Befestigungsstab entlang seiner Längserstreckung beweglich an der Vorrichtung vorhanden, z.B. gelagert. Beispielsweise wird die Vorrichtung über die Pflanze gestülpt und anschließend der Befestigungsstab bzw. die Befestigungsstäbe derart bewegt, dass die Vorrichtung stabil die Pflanze umgibt. Beispielsweise wird der Befestigungsstab um die Länge, welcher der Befestigungsstab länger ist als der längste Stab ins Erdreich bewegt, z.B. 30 cm.

Beispielsweise wird das Ende des Befestigungsstabes, welches einen größeren Durchmesser aufweist, als ein Durchmesser einer der Stäbe, bei der Anbringung der Vorrichtung ins Erdreich bewegt. Beispielsweise weist ein Befestigungsstab entlang seiner gesamten Länge einen Durchmesser auf, welcher größer ist, als ein Durchmesser einer der Stäbe. Zum Beispiel weist ein Befestigungsstab entlang seiner gesamten Länge einen Durchmesser auf, welcher größer ist, als ein Durchmesser jeder der Stäbe.

Beispielsweise ist ein Befestigungsstab durch den Draht mit den Stäben verbunden. Die Stäbe sind mit dem Draht miteinander verbunden. Beispielsweise ist der Draht schlaufenartig um die Stäbe und Befestigungsstäbe gelegt. Beispielsweise ist ein Stab oder Befestigungsstab von dem Draht umgeben, wobei der Draht den Stab oder Befestigungsstab an der Vorderseite und von der Rückseite umgibt. Denkbar ist auch, dass zwei Drähte verwendet werden, wobei ein Draht den Stab oder Befestigungsstab an der Vorderseite umgibt und der anderen Draht den Stab oder Befestigungsstab von der Rückseite umgibt. Der Draht verläuft beispielsweise von der Vorderseite des Stabes oder Befestigungsstabes zur Rückseite eines weiteren Stabes oder Befestigungstabes und weiter zu der Vorderseite eines weiteren Stabes.

Es wird durch das Verbinden der Stäbe und/oder Befestigungsstäbe miteinander durch einen Draht eine Matte gebildet. Beispielsweise wird der Anfang des Drahtes und das Ende des Drahtes an einem Befestigungsstab verbunden. Beispielsweise wird der Anfang des Drahtes und das Ende des Drahtes miteinander verbunden. Beispielsweise weist die Vorrichtung zwei Befestigungsstäbe auf, wobei zwischen den Befestigungsstäben die gleiche Anzahl an Stäben angeordnet ist bzw. der Abstand zwischen den Befestigungsstäben gleich ist. Beispielsweise kann die Vorrichtung im ungenutzten Zustand im zusammengelegten Zustand aufbewahrt werden, wobei im zusammengelegten Zustand die Befestigungsstäbe die Enden bilden und die Stäbe aufeinander liegen. Dies ist vorteilhaft, da die Vorrichtung wenig Platz einnimmt und mehrere Vorrichtungen aufeinander gelegt werden können.

Beispielsweise sind die Stäbe und die Befestigungsstäbe in einer Richtung quer zu den Längserstreckungen der Stäbe und quer zu den Längserstreckungen der Befestigungsstäbe nebeneinander angeordnet.

Beispielsweise ist die Vorrichtung in Form einer Wachstumshülle und/oder in Form einer Wuchshülle ausgebildet.

Weiter wird vorgeschlagen, dass der Draht als ein verzinkter Draht vorhanden ist.

Beispielsweise weist der Draht eine Dicke oder ein Durchmesser zwischen 0,3 mm und 0,6 mm auf. Beispielsweise weist der Draht eine Dicke oder ein Durchmesser zwischen 0,4 mm bis 0,6 mm, zwischen 0,5 mm bis 0,6 mm, zwischen 0,3 mm bis 0,5 mm oder zwischen 0,3 mm bis 0,4 mm auf. Beispielsweise kann die Dicke des Drahtes abhängig von der Anwendungsdauer variiert werden. Beispielsweise ist der Draht dicker bei längerer Anwendungsdauer. Der Draht weist z.B. einen runden Querschnitt auf.

Ebenfalls wird vorgeschlagen, dass ein Abstand zwischen einem ersten und einem zweiten Stab der Stäbe quer zur Längserstreckung des ersten und des zweiten Stabs zwischen 8 mm und 15 mm beträgt.

Hierdurch ist ein Lichteinfall für die mit der Vorrichtung zu umschließende Pflanze verbessert. Beispielsweise ist hierdurch ein Lichteinfall von bis zu 70 % des Umgebungslichts realisiert. Beispielsweise ist ein Lichteinfall von bis zu 60 % oder bis zu 50 % oder bis zu 40 % des Umgebungslichts realisiert. Beispielsweis wird durch den Lichteinfall, das Pflanzenwachstum verbessert.

Beispielsweise ist der Abstand zwischen allen Stäben zwischen 8 mm und 15 mm. Beispielsweise ist der Abstand zwischen den Stäben zwischen 9 mm und 15 mm, 10 mm und 15 mm, 11 mm und 15 mm, 12 mm und 15 mm, 13 mm und 15 mm, 14 mm und 15 mm, 8 mm und 14 mm, 8 mm und 13 mm, 8 mm und 12 mm, 8 mm und 11 mm, 8 mm und 10 mm oder 8 mm und 9 mm. Beispielsweise ist der Abstand als eine Öffnung vorhanden. Beispielsweise entspricht der Abstand zwischen den Stäben der Breite der Öffnung. Hierdurch kann Sonnenlicht durch die Öffnungen auf den durch die Vorrichtung zu schützenden Pflanzensetzling bzw. Baumsetzling scheinen.

Beispielsweise beträgt die Länge eines Stabs der Stäbe zwischen 35 cm und 120 cm.

Beispielsweise beträgt die Länge eines Stabs der Stäbe zwischen 40 cm und 120 cm, zwischen 50 cm und 120 cm, zwischen 60 cm und 120 cm, zwischen 70 cm und 120 cm, zwischen 80 cm und 120 cm, zwischen 90 cm und 120 cm, zwischen 100 cm und 120 cm, zwischen 110 cm und 120 cm, zwischen 40 cm und 110 cm, zwischen 40 cm und 100 cm, zwischen 40 cm und 90 cm, zwischen 40 cm und 80 cm, zwischen 40 cm und 70 cm, zwischen 40 cm und 60 cm oder zwischen 40 cm und 50 cm. Beispielsweise beträgt die Länge aller Stäbe zwischen 35 cm und 120 cm. Beispielsweise beträgt die Länge aller Stäbe zwischen 40 cm und 120 cm, zwischen 50 cm und 120 cm, zwischen 60 cm und 120 cm, zwischen 70 cm und 120 cm, zwischen 80 cm und 120 cm, zwischen 90 cm und 120 cm, zwischen 100 cm und 120 cm, zwischen 110 cm und 120 cm, zwischen 40 cm und 110 cm, zwischen 40 cm und 100 cm, zwischen 40 cm und 90 cm, zwischen 40 cm und 80 cm, zwischen 40 cm und 70 cm, zwischen 40 cm und 60 cm oder zwischen 40 cm und 50 cm. Die Länge der Stäbe der Vorrichtung kann beispielsweise an die Anwendungsdauer sowie an die Größe der Pflanze bzw. des Pflanzensetzlings angepasst werden.

Weiter wird vorgeschlagen, dass ein Stab der Stäbe eine Breite zwischen 8 mm und 20 mm aufweist.

Beispielsweise weisen alle Stäbe eine Breite zwischen 8 mm und 20 mm auf. Denkbar ist das ein Stab der Stäbe eine Breite zwischen 10 mm und 20 mm, zwischen 12 mm und 20 mm, zwischen 14 mm und 20 mm, zwischen 16 mm und 20 mm, zwischen 18 mm und 20 mm, zwischen 10 mm und 18 mm, zwischen 10 mm und 16 mm, zwischen 10 mm und 14 mm oder zwischen 10 mm und 12 mm aufweist.

Weiter ist denkbar das alle Stäbe eine Breite zwischen 10 mm und 20 mm, zwischen 12 mm und 20 mm, zwischen 14 mm und 20 mm, zwischen 16 mm und 20 mm, zwischen 18 mm und 20 mm, zwischen 10 mm und 18 mm, zwischen 10 mm und 16 mm, zwischen 10 mm und 14 mm oder zwischen 10 mm und 12 mm aufweisen.

Beispielsweise weist ein Stab eine Länge, eine Breite und eine Dicke auf. Denkbar ist, dass ein Stab eine Dicke zwischen 1 mm und 6 mm aufweist. Es ist auch vorstellbar, dass ein Stab eine Dicke zwischen 2 mm und 6 mm, zwischen 3 mm und 6 mm, 4 mm und 6 mm, zwischen 5 mm und 6 mm, zwischen 2 mm und 5 mm, zwischen 2 mm und 4 mm oder zwischen 2 mm und 3 mm aufweist. Denkbar ist, dass alle Stäbe eine Dicke zwischen 1 mm und 6 mm aufweisen. Es ist auch vorstellbar, dass alle Stäbe eine Dicke zwischen 2 mm und 6 mm, zwischen 3 mm und 6 mm, 4 mm und 6 mm, zwischen 5 mm und 6 mm, zwischen 2 mm und 5 mm, zwischen 2 mm und 4 mm oder zwischen 2 mm und 3 mm aufweisen.

Beispielsweise ist ein Stab in Form einer Halbzylinderschale ausgebildet. Beispielsweise ist der Stab aus einem Teil einer Bambusröhre hergestellt, z.B. wird die Bambusröhre entlang seiner Längserstreckung geteilt, um die Stäbe zu erhalten.

Beispielsweise beträgt die Länge eines Befestigungsstabs zwischen 50 cm und 140 cm.

Beispielsweise beträgt die Länge eines Befestigungsstabs zwischen 50 cm und 130 cm, zwischen 50 cm und 120 cm, zwischen 50 cm und 110 cm, zwischen 50 cm und 100 cm, zwischen 50 cm und 90 cm, zwischen 50 cm und 80 cm, zwischen 50 cm und 70 cm, zwischen 60 cm und 140 cm, zwischen 70 cm und 140 cm, zwischen 80 cm und 140 cm, zwischen 90 cm und 140 cm, zwischen 100 cm und 140 cm, zwischen 110 cm und 140 cm, zwischen 120 cm und 140 cm oder zwischen 130 cm und 140 cm. Beispielsweise beträgt die Länge aller Befestigungsstäbe zwischen 50 cm und 140 cm. Beispielsweise beträgt die Länge aller Befestigungsstäbea zwischen 50 cm und 130 cm, zwischen 50 cm und 120 cm, zwischen 50 cm und 110 cm, zwischen 50 cm und 100 cm, zwischen 50 cm und 90 cm, zwischen 50 cm und 80 cm, zwischen 50 cm und 70 cm, zwischen 60 cm und 140 cm, zwischen 70 cm und 140 cm, zwischen 80 cm und 140 cm, zwischen 90 cm und 140 cm, zwischen 100 cm und 140 cm, zwischen 110 cm und 140 cm, zwischen 120 cm und 140 cm oder zwischen 130 cm und 140 cm.

Ebenfalls wird vorgeschlagen, dass ein Befestigungsstab an einem Ende eine Dicke oder ein Durchmesser zwischen 15 mm und 30 mm aufweist.

Beispielsweise weist ein Befestigungsstab bzw. alle Befestigungsstäbe an dem Ende, welches im Erdreich befestigt wird, eine Dicke bzw. einen Durchmesser zwischen 15 mm und 30 mm auf. Beispielsweise weist ein Befestigungsstab durchgehend über die gesamte Länge eine Dicke bzw. Durchmesser zwischen 15 mm und 30 mm auf. Beispielsweise weisen alle Befestigungsstäbe durchgehend über die gesamte Länge eine Dicke bzw. Durchmesser zwischen 15 mm und 30 mm auf.

Weiter wird vorgeschlagen, dass die Vorrichtung genau zwei oder genau drei Befestigungsstäbe aufweist.

Denkbar ist auch, dass die Vorrichtung genau vier Befestigungsstäbe aufweist. Beispielswiese weisen die Befestigungsstäbe zueinander einen gleichmäßigen Abstand auf, z.B. ist zwischen den Befestigungsstäben die gleiche Anzahl an Stäben angeordnet.

Erfindungsgemäß bedecken die Stäbe zwischen 30 % und 50 % einer Fläche der Matte.

Beispielsweise sind die Stäbe derart voneinander beabstandet vorhanden, dass ein Freiraum zwischen den Stäben etwa 50 % bis 70 % der Mattenfläche bildet. Vorteilhafterweise bekommt der Pflanzensetzling im Innenraum der Vorrichtung durch die Freiräume Luft zugeführt, so dass ein Schimmelbefall verhindert werden kann. Beispielsweise überkreuzt sich der Draht im Freiraum zwischen den Stäben.

Beispielsweise weist die Vorrichtung zwischen zwei und acht Drähte auf.

Beispielsweise erstreckt sich ein Draht quer zu einer Längserstreckung eines Stabs der Stäbe entlang seiner Längenerstreckung. Beispielsweise erstrecken sich alle Drähte quer zu einer Längserstreckung eines Stabs der Stäbe entlang seiner Längenerstreckung. Beispielsweise sind zwei der mehreren Drähte in einer Richtung entlang einer Längserstreckung eines Stabs zwischen 15 cm und 25 cm, insbesondere zwischen 18 cm und 22 cm beabstandet. Beispielsweise weisen die Drähte zueinander einen Abstand zwischen 15 cm und 25 cm auf. Z.B. weist die Vorrichtung, wenn die Stäbe eine Länge von 120 cm haben, 6 Drähte auf.

### Figurenbeschreibung

Nachfolgend sind weitere Merkmale und Vorteile der Erfindung anhand von schematisch dargestellten Ausführungsbeispielen der Erfindung näher erläutert.

Im Einzelnen zeigt:
- Fig. 1: eine perspektivische Ansicht von der Seite auf eine Vorrichtung,
- Fig. 2: eine perspektivische Ansicht auf eine erfindungsgemäß Vorrichtung von oben,
- Fig. 3: eine schematische Ansicht eines Ausschnitts A der erfindungsgemäßen Vorrichtung nach Fig. 1,
- Fig. 4: eine schematische Ansicht eines Ausschnitts B der erfindungsgemäßen Vorrichtung nach Fig. 1,
- Fig.5: eine weitere Variante einer Vorrichtung nach Fig. 1.

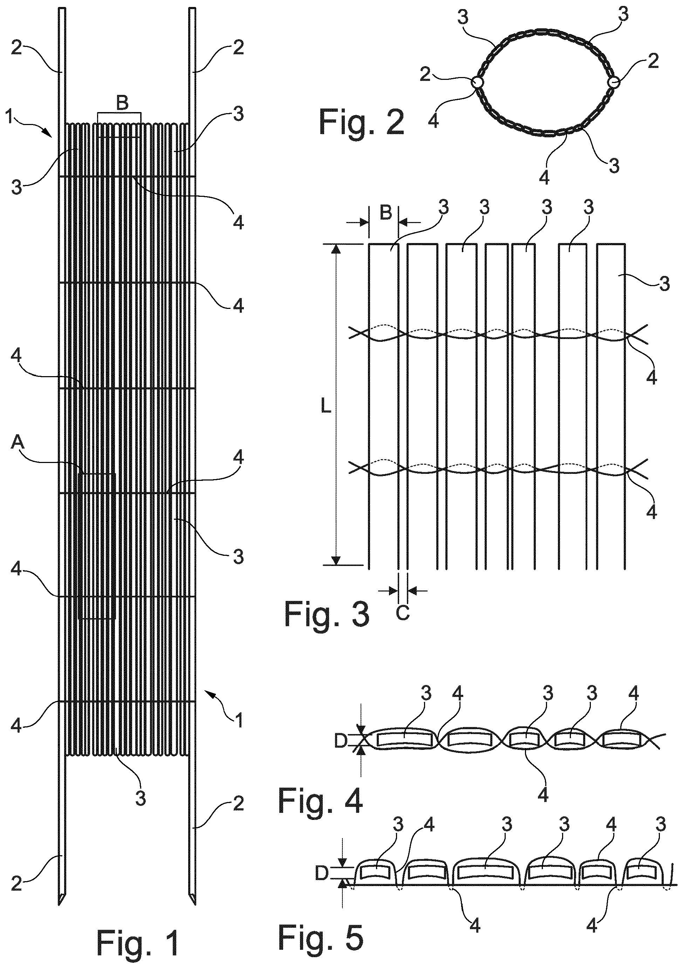

In der Figur 1 wird eine Vorrichtung 1 dargestellt, wobei die Vorrichtung zwei Befestigungsstäbe 2 aufweist, zwischen welchen mehrere Stäbe 3 angeordnet sind. Beispielsweise weisen die Stäbe 3 eine Längserstreckung auf, wobei die Stäbe 3 in einer Richtung quer zu den Längserstreckungen der Stäbe 3 nebeneinander angeordnet sind. In der Figur 1 sind die Befestigungsstäbe 2 an dem Ende, welches ins Erdreich bewegt werden kann, z.B. spitz ausgestaltet. Die Befestigungsstäbe 2 bestehen beispielsweise aus einem Bambusrohr und die Stäbe 3 aus Bambussplit.

Beispielsweise weisen die Stäbe 3 eine Breite B eine Länge L (s. Fig. 3) und eine Dicke D auf (s. Fig. 4). Die Stäbe 3 weisen beispielsweise entlang der Breite B eine Krümmung auf, wobei die Breite z.B. 10 mm bis 15 mm beträgt. Die Dicke D der Stäbe beträgt beispielsweise 2 mm bis 4 mm. Die Befestigungsstäbe 2 sind beispielsweise länger und dicker als die Stäbe 3 (s. Fig. 2), wobei die Stäbe 3 beispielsweise eine Länge L von 35 cm bis 120 cm haben. Vorzugsweise sind die Befestigungsstäbe 2 mindestens 30 cm länger als die Stäbe 3. Die Stäbe 3 weisen beispielsweise ungefähr eine gleiche Länge L auf, wobei die Unterschiede in den Längen der Stäbe 3 maximal 10 cm betragen. Die Stäbe 3 sind beispielsweise miteinander über einen Draht 4 verbunden, auch werden die Stäbe 3 über den Draht 4 mit den Befestigungsstäben 2 verbunden. Der Draht 4 wird beispielsweise derart um die Stäbe 3 und Befestigungsstäbe 2 gelegt, dass die Vorrichtung 1 direkt für einen Pflanzensetzling einsetzbar ist.

Beispielsweise wird die Vorrichtung über einen Pflanzensetzling gestülpt, so dass der Pflanzensetzling im Innenraum der Vorrichtung 1 aufgenommen ist. Die Stäbe und Befestigungsstäbe liegen beispielsweise auf dem Erdreich an. Ein Benutzer kann anschließend beispielsweise mittels eines Hammers die Befestigungsstäbe 2 in das Erdreich schlagen, so dass die Vorrichtung 1 stabil steht und den Pflanzensetzling umgibt.

Beispielsweise sind abhängig von der Länge der Stäbe 3 mehrere Drähte 4 vorhanden, z.B. sind die Drähte 4 20 cm voneinander in der Richtung der Länge der Stäbe 3 beabstandet (s. Fig. 1). Beispielsweise sind 5 Drähte 4 vorhanden, wenn die Stäbe 3 eine Länge von 100 cm aufweisen.

Die Vorrichtung 2 ist so ausgebildet, dass die Vorrichtung zusammengelegt werden kann. Dabei liegen beispielsweise die Stäbe 3 aufeinander und an den äußeren Enden sind die Befestigungsstäbe 2 angeordnet. Dies ist vorteilhaft, da dadurch die Vorrichtung 1 im ungenutzten Zustand wenig Platz einnimmt. Weiter können die Vorrichtungen 1 gut aufeinander gestappelt werden, indem die Stäbe 3 der unterschiedlichen Vorrichtungen 1 aufeinander gelegt werden.

Beispielsweise sind die Stäbe 3 zueinander beabstandet, wobei der Abstand C bzw. Freiraum zwischen den Stäben 3 vorzugsweise 8 mm bis 15 mm beträgt (s. Fig. 3). Beispielsweise ist hierdurch ein Lichteinfall von bis zu 70 % des Umgebungslichts realisiert, so dass der Pflanzensetzling gut wachsen kann. In dem Freiraum zwischen den Stäben überkreuzt sich beispielsweise der Draht 4, so dass der Draht beispielsweise den Stab 3 umgibt (s. Fig. 4).

Beispielsweise wird ein Draht 4 um eine Vorderseite eines ersten Stabes 3 gelegt und zu einer Rückseite eines zweiten Stabes 3 gelegt und danach wieder zu einer Vorderseite eines dritten Stabes 3 gelegt usw., so dass eine Matte gebildet wird. Beispielsweise werden die Enden des Drahtes 4 miteinander verbunden z.B. miteinander verdreht.

Eine weitere Variante einer Vorrichtung ist in Figur 5 zu sehen. Dabei umgibt ein erster Draht 4 ein Stab 3, wobei der erste Draht 4, um einen weiteren zweiten Draht 4 umschlungen wird. Der erste Draht 4 umgibt ein Stab 3 und gelangt beispielsweise von unten zu dem zweiten Draht 4 und wird um den zweiten Draht 4 nach oben gelegt, wobei der erste Draht 4 dann um den nächsten Stab 3 gelegt wird und wieder um den zweiten Draht 4 von unten geführt wird.

### Bezugszeichenliste

- 1: Vorrichtung
- 2: Befestigungsstab
- 3: Stab
- 4: Draht

## Patentansprüche

1. Vorrichtung (1) zum Schutz einer Pflanze, insbesondere Vorrichtung zum Schutz eines Baumes, wobei die Vorrichtung mehrere Stäbe (3) aus Bambus aufweist, wobei jeder der Stäbe (3) sich in einer Längserstreckung erstreckt, wobei die Stäbe (3) in einer Richtung quer zu den Längserstreckungen der Stäbe (3) nebeneinander angeordnet sind, wobei die Vorrichtung (1) einen Draht (4) aufweist, wobei die Stäbe (3) mittels des Drahts (4) miteinander zu einer Matte verbunden sind, wobei jeder der Stäbe (3) entlang seiner Längserstreckung mindestens eine Länge von 35 cm aufweist, wobei die Vorrichtung zwei Befestigungsstäbe (2) aufweist, wobei jeder der Befestigungsstäbe (2) sich entlang einer Längserstreckung erstreckt, wobei jeder der Befestigungsstäbe (2) in der Längserstreckung eine Länge aufweist, welche länger ist, als eine Länge der Stäbe (3), wobei jeder Befestigungsstab (2) an einem Ende einen Durchmesser aufweist, welcher größer ist, als ein Durchmesser einer der Stäbe (3), wobei alle Stäbe aus Bambussplit ausgebildet sind und die Befestigungsstäbe aus Bambusrohr gebildet sind, wobei die Stäbe (3) zwischen 30 % und 50 % einer Fläche der Matte bedecken.

2. Vorrichtung nach dem vorangegangenen Anspruch 1, **dadurch gekennzeichnet, dass** der Draht (4) als ein verzinkter Draht vorhanden ist.

3. Vorrichtung nach einem der vorangegangenen Ansprüche, **dadurch gekennzeichnet, dass** ein Abstand zwischen einem ersten und einem zweiten Stab (3) der Stäbe (3) quer zur Längserstreckung des ersten und des zweiten Stabs (3) zwischen 8 mm und 15 mm beträgt.

4. Vorrichtung nach einem der vorangegangenen Ansprüche, **dadurch gekennzeichnet, dass** die Länge eines Stabs (3) der Stäbe (3) zwischen 35 cm und 120 cm beträgt.

5. Vorrichtung nach einem der vorangegangenen Ansprüche, **dadurch gekennzeichnet, dass** ein Stab (3) der Stäbe (3) eine Breite zwischen 8 mm und 20 mm aufweist.

6. Vorrichtung nach einem der vorangegangenen Ansprüche, **dadurch gekennzeichnet, dass** die Länge eines Befestigungsstabs (2) zwischen 50 cm und 140 cm beträgt.

7. Vorrichtung nach einem der vorangegangenen Ansprüche, **dadurch gekennzeichnet, dass** ein Befestigungsstab (2) an einem Ende einen Durchmesser zwischen 15 mm und 30 mm aufweist.

8. Vorrichtung nach einem der vorangegangenen Ansprüche, **dadurch gekennzeichnet, dass** die Vorrichtung (1) genau zwei oder genau drei Befestigungsstäbe (2) aufweist.

9. Vorrichtung nach einem der vorangegangenen Ansprüche, **dadurch gekennzeichnet, dass** die Vorrichtung (1) zwischen zwei und acht Drähte (4) aufweist.

## Claims

1. Device (1) for protecting a plant, in particular a device for protecting a tree, wherein the device has multiple bars (3) made of bamboo, wherein each of the bars (3) extends along a longitudinal extent, wherein the bars (3) are arranged side by side in a direction transverse to the longitudinal extents of the bars (3), wherein the device (1) has a wire (4), wherein the bars (3) are connected to one another by means of the wire (4) to form a mat, wherein each of the bars (3) has at least a length of 35 cm along its longitudinal extent, wherein the device has two fastening bars (2), wherein each of the fastening bars (2) extends along a longitudinal extent, wherein, along the longitudinal extent, each of the fastening bars (2) has a length which is longer than a length of the bars (3), wherein, at one end, each fastening bar (2) has a diameter which is greater than a diameter of one of the bars (3), wherein all the bars are formed from split bamboo and the fastening bars are formed from bamboo cane, wherein the bars (3) cover between 30% and 50% of an area of the mat.

2. Device according to preceding Claim 1, **characterized in that** the wire (4) is provided as a galvanized wire.

3. Device according to either of the preceding claims, **characterized in that** a distance between a first and a second bar (3) of the bars (3) transverse to the longitudinal extent of the first and second bars (3) is between 8 mm and 15 mm.

4. Device according to one of the preceding claims, **characterized in that** the length of a bar (3) of the bars (3) is between 35 cm and 120 cm.

5. Device according to one of the preceding claims, **characterized in that** a bar (3) of the bars (3) has a width of between 8 mm and 20 mm.

6. Device according to one of the preceding claims, **characterized in that** the length of a fastening bar (2) is between 50 cm and 140 cm.

7. Device according to one of the preceding claims, **characterized in that**, at one end, a fastening bar (2) has a diameter of between 15 mm and 30 mm.

8. Device according to one of the preceding claims, **characterized in that** the device (1) has exactly two or exactly three fastening bars (2).

9. Device according to one of the preceding claims, **characterized in that** the device (1) has between two and eight wires (4).

## Revendications

1. Dispositif (1) pour la protection d'une plante, en particulier dispositif pour la protection d'un arbre, le dispositif présentant plusieurs tiges (3) en bambou, chaque tige (3) s'étendant dans une étendue longitudinale, les tiges (3) étant agencées les unes à côté des autres dans une direction transversale par rapport aux étendues longitudinales des tiges (3), le dispositif (1) présentant un fil (4), les tiges (3) étant reliées les unes aux autres au moyen du fil (4) en un tapis, chaque tige (3) présentant au moins une longueur de 35 cm le long de son étendue longitudinale, le dispositif présentant deux tiges de fixation (2), chaque tige de fixation (2) s'étendant le long d'une étendue longitudinale, chaque tige de fixation (2) présentant dans l'étendue longitudinale une longueur qui est plus longue qu'une longueur des tiges (3), chaque tige de fixation (2) présentant en une extrémité un diamètre qui est supérieur à un diamètre d'une des tiges (3), toutes les tiges étant réalisées à partir de lanières de bambou et les tiges de fixation étant formées à partir de cannes de bambou, les tiges (3) recouvrant entre 30% et 50% d'une surface du tapis.

2. Dispositif selon la revendication précédente 1, **caractérisé en ce que** le fil (4) est prévu sous forme de fil galvanisé.

3. Dispositif selon l'une des revendications précédentes, **caractérisé en ce qu'**une distance entre une première et une deuxième tige (3) des tiges (3), transversalement par rapport à l'étendue longitudinale de la première et de la deuxième tige (3), représente entre 8 mm et 15 mm.

4. Dispositif selon l'une des revendications précédentes, **caractérisé en ce que** la longueur d'une tige (3) des tiges (3) représente entre 35 cm et 120 cm.

5. Dispositif selon l'une des revendications précédentes, **caractérisé en ce qu'**une tige (3) des tiges (3) présente une largeur entre 8 mm et 20 mm.

6. Dispositif selon l'une des revendications précédentes, **caractérisé en ce que** la longueur d'une tige de fixation (2) représente entre 50 cm et 140 cm.

7. Dispositif selon l'une des revendications précédentes, **caractérisé en ce qu'**une tige de fixation (2) présente, en une extrémité, un diamètre entre 15 mm et 30 mm.

8. Dispositif selon l'une des revendications précédentes, **caractérisé en ce que** le dispositif (1) présente exactement deux ou exactement trois tiges de fixation (2).

9. Dispositif selon l'une des revendications précédentes, **caractérisé en ce que** le dispositif (1) présente entre deux et huit fils (4).
